# EUROPEAN PATENT APPLICATION

(11) **EP 4 687 162 A1**
(43) Date of publication of application: **04.02.2026**
(21) Application number: 24199646.1
(22) Date of filing: 11.09.2024
(51) Int. Cl.: H01F 27/33, H01F 27/30

(54) **COIL ARRANGEMENT AND TRANSFORMER**

(30) Priority: 31.07.2024 CN 202411041773; 31.07.2024 CN 202421835547 U
(71) Applicant: Hitachi Energy Ltd, 8050 Zürich (CH)
(72) Inventor: SUN, QingJun, Shanghai 200120 (CN); ZHENG, Tianbing, Datong 037000 (CN); ZHANG, Jiaming, Shanghai 201108 (CN); LIU, Yongjin, Shenyang 110179 (CN)
(74) Representative: Michalski Hüttermann & Partner Patentanwälte mbB

(57) **Abstract**

The invention relates to a coil arrangement (10) for an electrical transformer (1) and comprising
a coil (20) made from cast resin,
a support base (40) for supporting the coil (20),
a coil block (30) arranged between the support base (40) and the coil (20), and
a coupling device (50) configured for provision of a form fit between the support base (40) and the coil block (30) and extending into a recess (32) of the coil block (30), wherein
the coupling device (50) comprises a sliding member (52) extending into the recess (32) and configured for sliding relative to the support base (40) along a sliding direction (54), and
the coupling device (50) comprises an elastic member (56) providing a force along the sliding direction (54) and pushing the sliding member (52) away from support base (40) and/or towards the coil block (30).

## Description

### Technical Field

The invention relates to a coil arrangement for an electrical transformer, which coil arrangement comprises a coil, a support base for supporting the coil, a support base for supporting the coil, and a coil block arranged between the support base and the coil. The invention furthermore relates to an electrical transformer with a coil arrangement.

### Background Art

In electrical transformers, due to relatively large volume and weight, a coil of a coil arrangement may vibrate during operation. Additionally, dimensions of the coil may vary over time or depending on conditions in use. In this respect, a support base and a coil block may provide mechanical stability and especially resistance against vibrations and/or change in dimensions. It is a problem to provide sufficient lifetime of the coil arrangement while maintaining mechanical stability.

There is a desire to develop a coil arrangement that simplifies the assembly process while ensuring robust mechanical stability and optimal stress distribution. Such an arrangement would ideally include fewer components, be easier to manufacture, and offer enhanced stability and performance compared to existing designs.

### Summary of invention

It is an object of the invention to provide solutions with respect to coil arrangements for electrical transformers that provide increased lifetime, lower cost to produce and an easier assembly. Particularly it is an object to avoid or reduce disadvantages of known solutions.

The object of the invention is solved by the features of the independent claims. Preferred implementations are detailed in the dependent claims, the description and the figures.

The object is particularly solved by a coil arrangement for an electrical transformer. The coil arrangement comprises a coil made from, made of or including cast resin (also referred to as 'resin cast coil'), a support base for supporting the coil, a coil block arranged between the support base and the coil, and a coupling device configured for provision of a form fit between the support base and the coil block and extending into a recess of the coil block. It is suggested that the coupling device comprises a sliding member, wherein the sliding member extends into the recess and is configured for sliding relative to the support base along a sliding direction, and wherein the coupling device comprises an elastic member providing a force along the sliding direction pushing the sliding member away from support base and/or towards the recess and/or towards the coil block.

In other words, particularly, the present invention suggests a coil system for a dry-type transformer that includes a coil, a block member, a support member, and a coupling member. The block member is arranged between the support member and the coil. The block member and the support member are coupled to each other by means of the coupling member that engages with the block member and the support member. The coupling member is at least partially slidably arranged to be pushed towards the block member.

By means of the invention and by means of aspects described in the present application, it is advantageously realized that the coupling device can absorb energy from vibrations of the coil and can absorb deformation of the coil.

The invention has understood that deformations may occur due to thermal expansion of the coil, wherein the expansion may be compensated by the coupling device without risking functionality of the arrangement. In detail, the sliding member may slide into and out of the recess, wherein the form fit may be provided in any sliding position.

The coupling device may be provided using standard parts. Relative to prior solutions, the proposed coil arrangement may be applied better in high intensity vibration environments and in transformers that provide a lot of heat. The coupling device may beneficially absorb energy from cushioning vibrations and coils.

Electrical transformers are known in the art. Transformers typically include a coil arrangement with at least one coil which coil can be supported by a coil block of the coil arrangement. Typical coil blocks can provide mechanical support of the coil and preferably electrical insulation. A longitudinal axis of the coil is typically arranged vertically. The coil can be supported by the coil block provided between an upper end of the coil and the support base, and between an upper end of the coil and another one of the support base. The coil blocks can provide the coil with sufficient stiffness to prevent vertical motion of the coil relative to the support bases. The transformer may be provided as a one, two or three phase transformer. Therefore, the transformer may comprise one, two or three coils or coil arrangements. The coil arrangement, particularly the transformer, may be configured for medium voltages and/or high voltages. The coil arrangement, particularly the transformer, may be configured to be used in electrical power distribution applications, for example in a distribution substation. The coil may have an outer diameter that is least 0.5 m and/or up to 1.5 m. The outer diameter particularly is at least 0.75 m and/or up to 1.25 m, particularly is 1.1 m ± 0.1 m. A length of the coil along an axial direction may be at least 0.5 m and/or up to 2 m. The coil may have a primary coil section or primary coil side and a secondary coil section or secondary coil side inside the primary coil section. A wall may be arranged between said two coil sections. In an axial direction, the coil may comprise two or more separate coil members stacked atop each other which can form the coil. The coil or coil arrangement may surround or may be configured to surround a core of the transformer. The core may be round and/or symmetrical in shape along an axial direction and may particularly extend through the coil. The core may not necessarily be symmetrical. The coil, particularly the primary and/or secondary coil side, may correspond in shape to the core. For example, the primary and/or secondary coil side may be round or oval or of another shape.

The term high voltage means preferably a voltage above 12 kV or 36 kV or 72 kV or 1100 kV. A high voltage preferably relates to nominal voltages in the range from above 12 kV, 36 kV or 72 kV to 550 kV or 1100 kV, like 145 kV, 245 kV or 420 kV, or even more. The term medium voltage means preferably a voltage above 1 kV or 12 kV or 36 kV. A medium voltage preferably relates to nominal voltages in the range from above 1 kV, 12 kV or 36 kV to 72 kV, like 5 kV, 10 kV, 25 kV or 70 kV.

The coil is made from or includes cast resin, particularly is configured as a resin cast coil. The coil typically includes metallic windings which may be cast in epoxy resin. The coil may comprise the cast resin as a component of a composite material, e.g. the composite material including the cast resin and a fiber material embedded in the cast resin. The fiber material may be wound, e.g. arranged substantially in parallel to and/or substantially along the metallic windings.

The support base is typically configured for supporting the coil. The support base may support the coil from at least one side. Supporting the coil may be understood in the sense of providing a foundation and/or a fixation. The support base may comprise a support beam. The support base may extend substantially obliquely or perpendicularly to an axial direction of the coil. The support base may support more than one coil, e.g. two or three coils which may be comprised by the coil arrangement.

The coil block is arranged between the support base and the coil. The coil block may provide at least an indirect connection between the support base and the coil. The coil block may be in indirect or direct contact to the support base and/or the coil. The coil block may provide an electrical insulation for the coil relative to the ground. The coil block may comprise a substantially monolithic structure and/or a block shape. The block shape may comprise at least substantially a rigid and/or inflexible structure particularly configured for bearing loads along at least one direction. The coil block may have two support surfaces facing away from one another.

The coupling device may be referred to a component or assembly configured for coupling. The coupling device is configured for provision of a form fit and/or positive fit between the support base and the coil block and extends into a recess of the coil block. Thus, the coupling device may provide a connection between the support base and the coil block. For example, the coupling device may project into and/or penetrate the coil block and particularly the coil block. The coupling device may be arranged movable at least in part relative to the coil block e.g. to compensate for deformation of the coil.

The sliding member may be referred to a part of the coupling device that is configured for sliding. The sliding member extends into the recess, i.e. penetrates the coil. For example, upon sliding the sliding member may extend into the recess at a varying depth and/or may compensate a change in length of the coil. The sliding member may comprise or consist of a substantially rigid material, e.g. metal.

The sliding member is configured for sliding relative to the support base along a sliding direction. The sliding member may be guided by means of the coupling device and/or the support base to be movable along the sliding direction. The sliding direction may sectionally or entirely follow a substantially straight line.

The elastic member may be referred to a part of the coupling device that is configured to be elastically deformable and/or compressible. The elastic member is particularly configured for providing a force along the sliding direction. The force may be arranged to push the sliding member away from support base and/or towards the recess and/or towards the coil block. For example, the sliding member may be elastically and slidably held to be moved against the force upon pushing it so that it can automatically project into the recess.

Particularly, the coupling device comprises a seat that can be or is coupled and/or fixed to the support base. The seat may be configured as a mount, guide or holder for the sliding member. The seat may be screwed into the support base, particularly into an opening of the support base. The opening of the support base may comprise a thread for the seat to be screwed in, wherein the seat has a thread corresponding to the thread of the support base. The seat may be pressed into the support base or an opening of the support base.

The sliding member may be configured for sliding in the seat. The sliding member may comprise a preferably cylindrical shaft guided in the seat and/or a front end projecting into the recess, particularly the front end configured to be contacting, especially contacting, a bottom of the recess. The seat may have an opening, particularly a cylindrical bore, particularly extending along the sliding direction. The opening of the seat may correspond to the sliding member, especially to the shaft, for the sliding member so slide in and/or be guided by said opening.

The elastic member may comprise a spring providing the force along the sliding direction, wherein the force may push the sliding member away from support base, especially from the seat, and/or towards the coil block, particularly towards the recess, especially the bottom of the recess. The spring may at least sectionally surround the sliding member. The spring may include, particularly may be formed as, a disc spring guided on the sliding member. The disc spring may be guided on the shaft and/or may be in contact on one side to a shoulder of the shaft and/or of the front end and on another side to the seat and/or to the support base. The sliding member may be provided with at least one washer, e.g. in contact to the spring.

The seat may include an outer part configured to be coupled to the support base, particularly coupled to the support base. The seat may include an inner part, e.g. a sleeve, configured to be coupled to the outer part, particularly coupled to the outer part. The inner part may be screwed into the outer part, particularly to be adjustable along the sliding direction. The inner part may comprise an opening particularly for guiding the sliding member along the sliding direction. The sliding member may be guided through both the outer and the inner part. The opening in the inner part may be larger than the sliding member and/or may correspond to the sliding member. The inner part may have a front side facing towards the recess and particularly arranged in contact to the elastic member, e.g. directly or indirectly via a washer or via the at least one washer. The opening may extend through the inner part. The inner part may comprise an engagement section, e.g. opposite the front side, for attaching a screwing tool. A multi-part seat may enhance the ability for adjustments of the coupling e.g. to adapt to different environments.

The coupling device may at least partially or fully comprise or consist of a metal material, e.g., steel and/or brass. The seat, the inner part, the outer part, the sliding member and/or the spring may comprise or consist of the metal material or different metal materials. The metal material(s) may provide structural stability and a resistance against failure.

The seat may include a locking means. The locking means may be configured for reversibly engaging with at least two of the outer part, the inner part and the support base, particularly to prevent a movement between the outer part, the inner part and/or the support base. The locking means may comprise a pin, a bolt, a screw, a splint or the like.

The coil arrangement may comprise a flexible member. The flexible member may be arranged between the coil block and the coil. The flexible member may be in the form of a mat and/or may be substantially flat. The flexible member may be in contact on opposite sides to the coil block and to the coil, especially the contact extending across a surface area on both sides for load distribution. The flexible member may have a thickness along the axial direction of less than 30 mm, less than 20 mm, or less than 15 mm, particularly the thickness being 10 mm ± 5 mm. The flexible member may comprise or may be made from an electrically insulating material, particularly comprising rubber, a polymer compound and/or silicone. The flexible member may provide a dampening effect and a protection for the other components of the coil arrangement against failure from vibrations.

The recess may be configured as a blind hole. The recess may be cast into or machined into the coil block. The blind hole may have a substantially cylindrical inner wall. The blind hole may have a flat or conical bottom. The blind hole may help to reduce local stresses to the material in use.

The recess, particularly the blind hole, may have a top shoulder. The top shoulder may be ring shaped. The top shoulder may face the coupling device and/or may be located on an upper side of the coil block. The top shoulder may be configured for at least a sectional accommodation of the coupling device, particularly the inner part and/or the outer part and/or the elastic member, along the sliding direction. The top shoulder reduce space needed for the coupling device.

The coil block may comprise or consist of a fiber reinforced polymer compound and/or an electrically insulating material. The fiber reinforced polymer compound may include glass fibers and/or carbon fibers and/or a thermoset resin, wherein the fibers may be embedded in the thermoset resin. The coil block may be a monolithically shaped cast part. The coil block may comprise ribs extending substantially perpendicularly to the extension of the coil. Thus, electrical and/or mechanical properties of the coil arrangement may be enhanced. The coil block may as well be produced at low cost with enhanced lifetime.

The coil arrangement may comprise another one of the support base for supporting the coil on a side opposite the support base, e.g. in the region of a lower side of the coil. The coil arrangement may comprise another one of the coil block arranged between the another one of the support base and the coil. The coil arrangement may comprise another one of the flexible member arranged between the another one of the coil block and the coil. The support base and the another one of the support base may be connected, e.g. via connecting rods extending along the coil. The mechanical stability of the coil arrangement may thus be enhanced.

It may be that two or more, particularly three or four, of the coil blocks are provided and distributed along an axial end face of the coil and/or in a circumferential direction of the coil. The distribution of the coil blocks on the axial end face may be substantially equidistantly to one another, e.g. the coil blocks comprising in a circumferential direction substantially the same distances to one another. The coil block may comprise different distances to one another, e.g. in case of a non-symmetrical shape of a core of the transformer or depending on the specific design. Each of the two or more of the coil blocks may be assigned to one or more of the coupling device. The coil block may have two or more of the recess, wherein each of the two or more of the recess of the coil block may be assigned to one of the coupling device. For example, each coil block may be coupled to the support base by means of at least two coupling devices. This may ensure even distribution of support around the coil, enhancing its stability and reducing stress points.

The object may further be solved by a dry-type transformer including a/the coil arrangement, particularly wherein a/the support base of the coil arrangement may be configured for being arranged atop of a/the coil of the coil arrangement. The dry-type transformer may comprise two or three of the coils, particularly arranged in a row.

The term 'or' may be replaced by 'and/or' throughout the present disclosure. As such, where 'or' is used, it is not necessarily meant that merely alternatives are named.

### Brief description of drawings

These and other aspects of the invention will be apparent from and elucidated with reference to the implementations described hereinafter.

In the drawings:
Fig. 1 shows a part of a dry-type transformer in a perspective view;
Fig. 2 shows a part of another dry-type transformer in a perspective view; and
Fig. 3A-B shows a sectional view (A) and an explosion view (B) of a coupling device to be used in a coil arrangement of a dry-type transformer, e.g. that of Fig. 2.

### Description of implementations

The description contains procedural or methodical aspects upon describing structural features of the invention; the structural features can be understood well in that way. It is emphasized to the reader that such structural features can be lifted from the described context without hesitation or the question of an intermediate generalization to form aspects of the invention. It is also emphasized to the reader that any the structural features described in the following can be understood as individual aspects of the invention to distinguish from known solutions, despite being possibly lifted from the context.

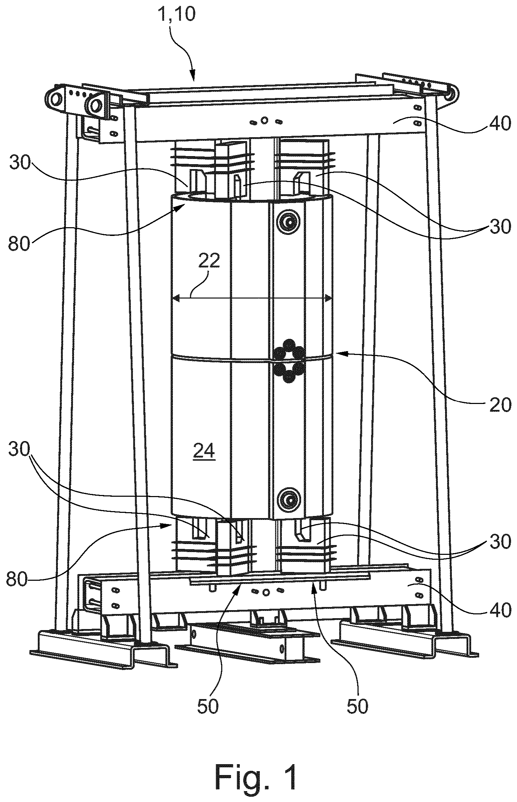

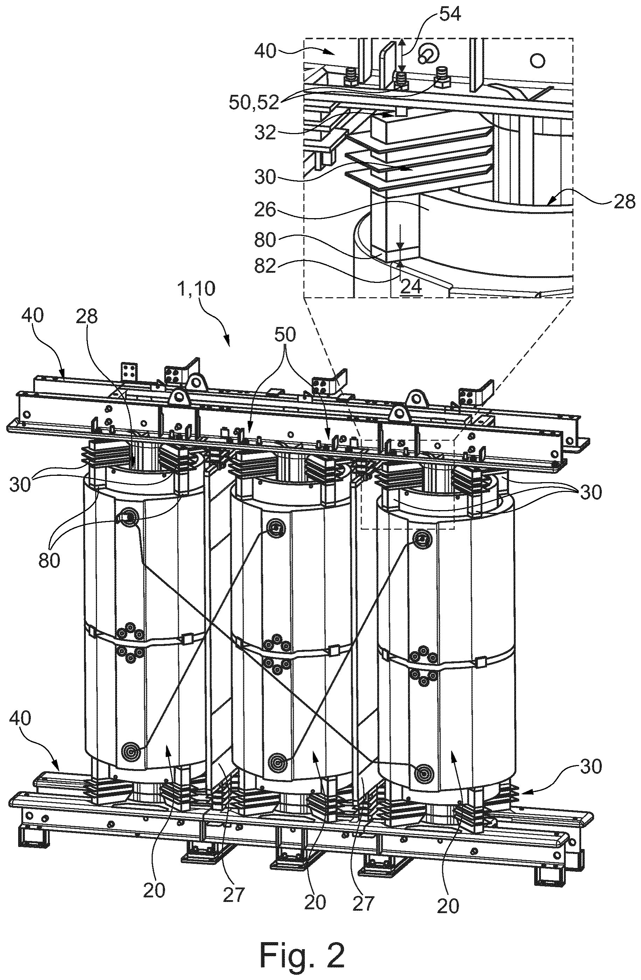

Fig. 1 and Fig. 2 each partially show a dry-type transformer 1 including a coil arrangement 10, where a support base 40 is configured for being arranged atop of a coil 20. In each case, another support base 40 is arranged opposite the support base 40 along the axial direction or extension of the respective coil 20.

In Fig. 1, the coil arrangement 10 comprises the coil 20 made from or including cast resin (e.g. also known as cast resin coil), a support base 40 for supporting the coil 20 at its upper side or at the top, a coil block 30 arranged between the support base 40 and the coil 20, and a coupling device 50 configured for provision of a form fit between the support base 40 and the coil block 30. The coupling device 50 is provided in the region of an upper side of the coil 20 or at the top.

The support base 40 comprises steel beams.

The coil 20 includes a radially inner secondary coil side 28 and an outer primary coil side 24.

The coil block 30 consists of an electrically insulating fiber reinforced polymer compound. The fiber reinforced polymer compound includes glass fibers or carbon fibers and a thermoset resin embedding the respective fibers.

The coil arrangement 10 comprises another one of the support base 40 for supporting the coil 20 on a side opposite the support base 40, namely in the region of a lower side of the coil 20 or at the bottom. The coil arrangement 10 comprises another one of the coil block 30 arranged between the another one of the support base 40 and the coil 20, and another one of the flexible member 80 arranged between the another one of the coil block 30 and the coil 20. The support base 40 and the another one of the support base 40 are coupled via four vertical connecting rods. Particularly, in the region of a lower side of the coil 20, another one of the coupling device 50 is not provided.

In other words, particularly, the coil arrangement 10 includes a support base 40 at the top, a support base 40 at the bottom. The coil 20 stands on and is coupled to four coil blocks 30 which again stand on and are coupled to the support base 40 at the bottom. At the top, the coil 20 is supported via four coil blocks 30 which are coupled to the support base 40 at the top via coupling devices 50.

Thus, on both sides of the coil 20, four of the coil blocks 30 are provided and distributed substantially equidistantly along an axial end face of the coil 20 and in a circumferential direction of the coil 20. The end face of the coil 20 is ring-shaped.

For example, the coil blocks 30 may be provided in a circumferential distance measured as an angle about an axial direction of the coil 20, the circumferential distance being approximately 45°.

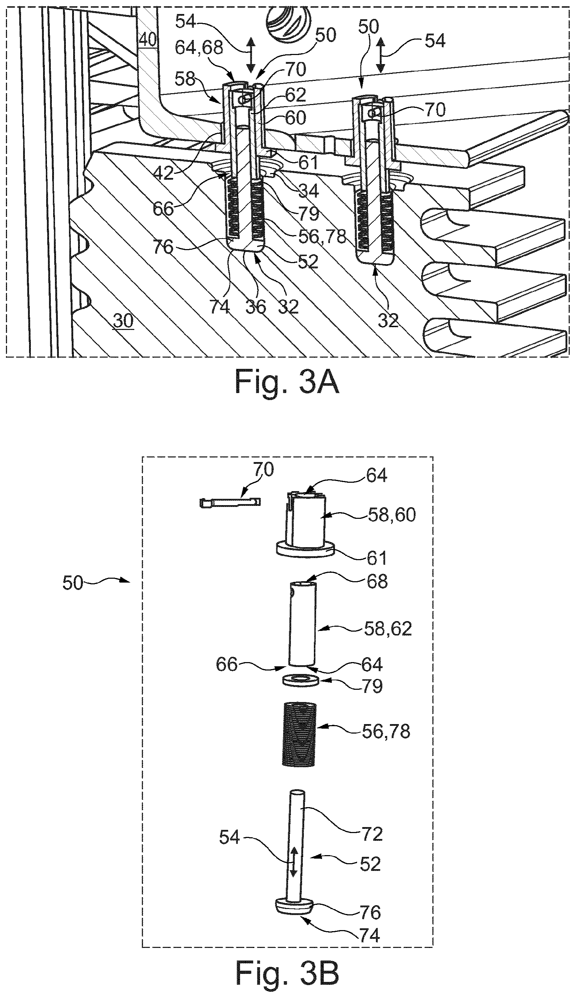

The coupling devices 50 are coupled to the support base 40 and comprise a sliding member 52. Each coupling device 50 engages with a respective coil block 30 providing said form fit and can slide along a sliding direction 54, e.g. when the coil 20 thermally expands in an axial direction or along the sliding direction 54 so that, for example, the sliding members 52 may move with the coil 20 and/or may be pushed from the coil block 30 moving with the coil 20. Each of the four coil blocks 30 at the top of the coil 20 is assigned to two of the coupling device 50. Each of the four coil blocks 30 has two recesses 32 for engagement with the respective coupling device 50 (cf. also Fig. 3A-B representing the described configuration).

In an axial direction or along the sliding direction 54, the coil 20 comprises two separate coil members stacked atop each other forming the coil 20. For example, the coil 20 has an outer diameter 22 of 1.1 m ± 0.1 m.

The coil arrangement 10 of Fig. 2 includes three coils 20, one for each of three electrical phases the transformer 1 is configured to be electrically coupled to. Here, the three coils 20 are arranged in a row. Each of the three coils 20 has two separate coil members stacked atop each other forming the respective coil 20.

The three coils 20 are each supported by means of one support base 40 at the top and by means of another one of the support base 40 at the bottom. There are eight coil blocks 40 provided per coil 20, wherein four of the eight coil blocks 40 are arranged at the top and four at the bottom. The coil blocks 40 at the bottom may as well be referred to as another ones of the coil blocks 40. The coil blocks 40 at the top are coupled via the coupling devices 50 to the support base 40.

Between two adjacent coils 20 a partition wall 27 is arranged which can shield one coil 20 from the other coil 20. The partition wall 27 may be electrically insulating. The partition wall 27 may be fastened to one or to both support bases 40.

As can be seen in a detailed view depicted in the top of Fig. 2, two coupling devices 50 extend into two recesses 32 of the respective coil block 30 in order to couple the support base 40 arranged above the coil block 30 with the coil block 30. For electrical purposes, each coil block 30 has at least three ribs extending substantially perpendicularly to the extension of the coil 20. The ribs can be seen in Fig.3A as well.

It can also be seen in Fig. 2 that the coil block 30 is in contact to a primary coil side 24 of the coil 20 via an electrically insulating flexible member 80 between the coil block 30 and the coil 20, which member 80 for example has a thickness 82 of up to 20 mm, especially the thickness 82 being 10 mm ± 5 mm.

The coil 20 has a wall 26 radially between its primary coil side 24 and a secondary coil side 28 of the coil 10. The wall 26 particularly projects axially into the coil blocks 30, particularly into a support section or gap thereof. The wall 26 particularly extends in an axial direction on both sides beyond the coil sides 24, 28.

Fig. 3A shows a sectional detail of the coil arrangement 10 of Fig. 2. It can be seen that the two coupling devices 50 extend into the recesses 32 of the coil block 30. The coupling devices 50 and the recesses 32 are designed similarly. Fig. 3B shows an explosion view of one of the coupling devices 50.

The coupling device 50 comprise a sliding member 52 with a cylindrical shaft 72 and configured for at least sectionally extending into the recess 32. The sliding member 52 is configured for sliding relative to the support base 40 along a sliding direction 54 which is at least substantially in parallel to the axial extension of the coil 20.

The coupling device 50 comprises an elastic member 56 in the form of a spring 78 providing a force along the sliding direction 54 and pushing the sliding member 52 away from support base 40 and towards the coil block 30. The spring 78 is a disc spring guided on the shaft 72. When the sliding member 52 is pushed towards the coil block 30, the spring 78 provides that the force acts to push the sliding member 52 in an opposite direction.

The coupling device 50 comprises a seat 58 to be coupled to the support base 40. The sliding member 52 is configured for sliding in the seat 58 by means of the shaft 72 guided in a cylindrical opening 64 of the seat 58 and a front end 74 projecting into the recess 32. The front end 74 can contact a bottom 36 of the recess 32. The bottom 36 of the recess 32 may correspond to a form of the front end 74.

The spring 78 is in contact on one side to a shoulder 76 of the front end 74 and on another side to the seat 58, particularly an inner part 62 of the seat 58 and via a washer 79.

The seat 58 includes an outer part 60 to be coupled to the support base 40, namely screwed into a threaded opening 42 of the support base 40. The seat 58 further includes the inner part 62 screwed into the outer part 60 to be adjustable along the sliding direction 54 by way of screwing. The inner part 62 comprises an engagement section 68 for attaching a screwing tool for adjusting the coupling device 50.

The outer part 60 has a particularly annular protrusion 61 configured for stopping against the support base 40. The protrusion 61 may optionally stop against the coil block 30, e.g. when the coil 20 extends in length.

The inner part 62 comprises the opening 64 for guiding the sliding member 52 along the sliding direction 54. The inner part 62 has a front side 66 facing towards the recess 32 and arranged in contact to the elastic member 56 via a washer 79. The opening 64 extends through the inner part 62. The engagement section 68 is arranged opposite the front side 66 for attaching a screwing tool easily from the top.

The coupling device 50 consists of metal materials, e.g. steel and/or brass.

As can particularly be seen in the explosion view of the coupling device 50 in Fig. 3B, the seat 58 includes a locking means 70, e.g. a splint, configured for reversibly engaging with the outer part 60 and the inner part 62 to prevent a screwing movement between outer part 60 and inner part 62.

The recess 32 is configured as a blind hole. The recess 32 has a top shoulder 34 facing the coupling device 50 and configured for at least a sectional accommodation of the coupling device 50 along the sliding direction 54. In detail, the recess 32 is larger in radial extension than the seat 58, particularly the outer part 60 thereof.

The top shoulder 34 is particularly chamfered for providing that risk for collision with the seat 58, e.g. in this case with the protrusion 61 of the seat 58, is reduced and that and entry of the seat 58 into the recess 32 for accommodation thereof is enhanced in mechanical terms.

### Reference signs list

- 1: electrical transformer
- 10: coil arrangement
- 20: coil
- 22: outer diameter
- 24: primary coil side
- 26: wall
- 27: partition wall
- 28: secondary coil side
- 30: coil block
- 32: recess
- 34: top shoulder
- 36: bottom
- 40: support base
- 42: opening
- 50: coupling device
- 52: sliding member
- 54: sliding direction
- 56: elastic member
- 58: seat
- 60: outer part
- 61: protrusion
- 62: inner part
- 64: opening
- 66: front side
- 68: engagement section
- 70: locking means
- 72: shaft
- 74: front end
- 76: shoulder
- 78: spring
- 79: washer
- 80: flexible member
- 82: thickness

## Claims

1. Coil arrangement (10) for an electrical transformer (1) and comprising
a coil (20) made from cast resin,
a support base (40) for supporting the coil (20),
a coil block (30) arranged between the support base (40) and the coil (20),
and
a coupling device (50) configured for provision of a form fit between the support base (40) and the coil block (30) and extending into a recess (32) of the coil block (30), wherein
the coupling device (50) comprises a sliding member (52) extending into the recess (32) and configured for sliding relative to the support base (40) along a sliding direction (54), and
the coupling device (50) comprises an elastic member (56) providing a force along the sliding direction (54) and pushing the sliding member (52) away from support base (40) and/or towards the coil block (30).

2. Coil arrangement (10) according to the preceding claim, the coupling device (50) comprising a seat (58) that is coupled to the support base (40), wherein
the sliding member (52) is configured for sliding in the seat (58) and comprises a preferably cylindrical shaft (72) guided in the seat (58) and a front end (74) projecting into the recess (32), particularly the front end (74) contacting a bottom (36) of the recess (32).

3. Coil arrangement (10) according to any one of the preceding claims, the elastic member (56) comprising a spring (78) providing the force along the sliding direction (54) and pushing the sliding member (52) away from support base (40) and optionally from the seat (58).

4. Coil arrangement (10) according to the preceding claim, the spring (78) including a disc spring guided on the sliding member (52), preferably guided on the shaft (72) and in contact on one side to a shoulder (76) of the front end (74) and on another side to the seat (58).

5. Coil arrangement (10) according to any one of the preceding three claims, the seat (58) including
an outer part (60) coupled to the support base (40), and
an inner part (62) screwed into the outer part (60) to be adjustable along the sliding direction (54) and comprising an opening (64) for guiding the sliding member (52) along the sliding direction (54), wherein
the inner part (62) has a front side (66) facing towards the recess (32) and particularly arranged in contact to the elastic member (56), and preferably
the opening (64) extending through the inner part (62) and/or the inner part (62) comprising an engagement section (68) opposite the front side (66) for attaching a screwing tool.

6. Coil arrangement (10) according to any one of the preceding claims, wherein the coupling device (50) at least partially or fully comprises a metal material, e.g. steel and/or brass.

7. Coil arrangement (10) according to any one of the preceding five claims, the seat (58) including
a locking means (70) configured for reversibly engaging with the outer part (60) and the inner part (62) to prevent a movement between outer part (60) and inner part (62).

8. Coil arrangement (10) according to any one of the preceding claims, comprising a flexible member (80) arranged between the coil block (30) and the coil (20), wherein
the flexible member (80) has a thickness (82) along the axial direction of less than 30 mm, less than 20 mm, or less than 15 mm, particularly the thickness (82) being 10 mm ± 5 mm, and preferably
the flexible member (80) is made from an electrically insulating material, particularly comprising rubber, a polymer compound and/or silicone.

9. Coil arrangement (10) according to any one of the preceding claims, wherein the recess (32) is configured as a blind hole.

10. Coil arrangement according to any one of the preceding claims, wherein the recess (32) has a top shoulder (34) facing the coupling device (50) and configured for at least a sectional accommodation of the coupling device (50) along the sliding direction (54).

11. Coil arrangement (10) according to any one of the preceding claims, wherein
the coil block (30) comprises or consists of a fiber reinforced polymer compound and/or an electrically insulating material, and particularly
the fiber reinforced polymer compound includes glass fibers and/or carbon fibers and/or including a thermoset resin.

12. Coil arrangement (10) according to any one of the preceding claims, comprising another one of the support base (40) for supporting the coil (20) on a side opposite the support base (40) and/or in the region of a lower side of the coil (10), and
another one of the coil block (30) arranged between the another one of the support base (40) and the coil (20), and, optionally,
another one of the flexible member (80) arranged between the another one of the coil block (30) and the coil (20).

13. Coil arrangement (10) according to any one of the preceding claims, wherein
two or more, particularly three or four, of the coil blocks (30) are provided and distributed substantially equidistantly along an axial end face of the coil (20) and in a circumferential direction of the coil (20), and preferably wherein each of the two or more of the coil blocks (30) is assigned to one or more of the coupling device (50), and/or
the coil block (30) has two or more of the recess (32), each of the two or more of the recess (32) of the coil block (30) is assigned to one of the coupling device (50).

14. Coil arrangement (10) according to the preceding claim, wherein the coil (20) has an outer diameter (22), wherein the outer diameter (22) is least 0,5 m and/or up to 1.5 m, preferably is at least 0.75 m and/or up to 1.25 m, particularly is 1.1 m ± 0.1 m.

15. Dry-type transformer (1) including the coil arrangement (10) according to any one of the preceding claims, wherein the support base (40) is configured for being arranged atop of the coil (20).
